# EUROPEAN PATENT SPECIFICATION

(11) **EP 3 507 621 B1**
(45) Date of publication and mention of the grant of the patent: **06.03.2024**
(21) Application number: 16890899.4
(22) Date of filing: 31.08.2016
(51) Int. Cl.: G01T 1/20

(54) **RADIATION DETECTOR AND FABRICATING METHOD THEREOF**
STRAHLUNGSDETEKTOR UND HERSTELLUNGSVERFAHREN DAFÜR
DÉTECTEUR DE RAYONNEMENT ET SON PROCÉDÉ DE FABRICATION

(43) Date of publication of application: 10.07.2019
(73) Proprietor: BOE Technology Group Co., Ltd., Beijing 100015 (CN)
(72) Inventor: TIAN, Hui, Beijing 100176 (CN)
(74) Representative: Cohausz & Florack
(86) International application number: PCT/CN2016/097459
(87) International publication number: WO 2018/039962

(56) References cited:
- EP-A2- 2 919 269
- WO-A1-2017/008166
- CN-A- 105 118 840
- CN-A- 105 428 384
- CN-A- 106 291 654
- CN-U- 206 020 675
- US-A1- 2008 302 970
- US-A1- 2010 237 250
- US-A1- 2012 038 013
- US-A1- 2013 048 862
- US-A1- 2013 048 866
- US-A1- 2016 148 980

## Description

### TECHNICAL FIELD

The present invention relates to optical electrical technology, and more particularly, to a radiation detector and a fabricating method thereof.

### BACKGROUND

A direct conversion radiation detector typically includes a radiation receiver, a processor, and a power supply. Typically, the radiation receiver has a scintillation layer made of Gd₂O₂S or CsI, a large-area amorphous silicon sensor array, and a readout circuit. The scintillation layer converts the radiation (e.g., X-ray photons) into visible light. The large-scale integrated amorphous silicon sensor array then converts the visible light into electrons, which is then digitized by the readout circuit. The digitized signal is transmitted to a computer for image display.

An indirect conversion radiation detector typically includes a scintillation layer made of Gd₂O₂S or CsI, a PIN photodiode, and a thin film transistor array. The scintillation layer converts the radiation (e.g., X-ray photons) into visible light. The PIN photodiode converts the visible light into electrical signals for image display. U.S. patent application US2008/302970 A1 discloses a method for manufacturing a semiconductor resistor including forming a well region in a semiconductor substrate, with the well region serving as a resistive region, forming a pair of contact regions spaced apart from each other in the well region, and forming a diffusion region in an intermediate portion between the pair of contact regions on a surface of the well region. The diffusion region is configured to adjust resistance and temperature dependence of the semiconductor resistor.
U.S. patent application US2016/148980 A1 discloses organic x-ray detectors and organic x-ray systems employing the detectors are presented. An Organic x-ray detector has a layered structure that includes a thin film transistor (TFT) array disposed on a substrate, a first electrode disposed on the TFT array, a leakage reduction layer disposed on the first electrode, an absorber layer disposed on the leakage reduction layer, a second electrode disposed on the absorber layer; and a scintillator layer disposed on the second electrode. The leakage reduction layer includes a conjugate polymer and a crosslinkable compound. A process for fabricating an organic x-ray detector is also presented.
European patent application EP 2919 269 A2 discloses a multilayer structure for use in a photosensor is provided. The multilayer structure includes a substrate, a thin film transistor comprising a metal oxide semiconductor channel and a photosensing element comprising amorphous silicon. The thin film transistor is electrically connected to the photosensing element, and the thin film transistor and photosensing element are on the substrate and separated by a hydrogen barrier structure.
U.S. patent application US2013/048866 A1 disclsoes a radiation detector and a radiological image radiographing apparatus capable of improving the quality of an obtained radiological image without causing an additional cost are provided. A first scintillator configured to include columnar crystals generating first light corresponding to a radiation emitted through a TFT substrate is laminated on the other surface of the TFT substrate that has a first photoelectric conversion element, which has one surface from which a radiation is emitted and the other surface from which at least one of the first light and the second light is emitted and which generates electric charges corresponding to the light, and a first switching element. A second scintillator which generates second light corresponding to a radiation emitted through the first scintillator and has different energy characteristics of absorbed radiations from the first scintillator is laminated on a surface of the first scintillator not facing the TFT substrate.
Chinese Patent Application CN 105 428 384 A discloses an image sensor and a manufacturing method thereof are provided. The image sensor comprises a semiconductor substrate, an interlayer dielectric layer, contact electrodes, a perovskite photoelectric film, a passivation layer and a three-primary-color filtering film. A photoelectric conversion unit is enabled to be separated from other functional units through introduction of the perovskite photoelectric film, and the two-dimensional planer structure of a conventional CMOS image sensor is optimized into a three-dimensional laminated structure. The image sensor based on the perovskite photoelectric film can have 100% of filling coefficient, and the chip size is greatly reduced. Besides, the technological requirement for extremely low noise of a silicon photodiode does not need to be considered in the manufacturing process of the chip so that the technological requirement can be reduced and cost can be substantially reduced.
WO 2017/008166 A1 is relevant to this application for novelty only under A54(3) EPC, and relates to a radiation detector having a plurality of pixels, with a base substrate, TFT, a scintillator layer, a photosensor and an insulating layer wherein the photosensor, the TFT, and the insulating layer are in three different vertically stacked layers.

### SUMMARY

In one aspect, the present invention provides a radiation detector according to claim 1, having a plurality of pixels, comprising a base substrate; a thin film transistor on the base substrate; a scintillator layer on a side of the thin film transistor distal to the base substrate for converting radiation into light; and a photosensor on a side of the thin film transistor distal to the base substrate and proximal to the scintillator layer for converting light to electrical charges; the photosensor and the thin film transistor being in two different vertically stacked layers of a vertically stacked multi-layer structure; the photosensor comprising a photoelectric conversion layer optically coupled to the scintillator layer.

The radiation detector further comprises an insulating layer on a side of the photoelectric conversion layer proximal to the thin film transistor; the photosensor, the thin film transistor, and the insulating layer being in three different vertically stacked layers of the vertically stacked multilayer structure.

The photosensor further comprises a driving electrode and a sensing electrode coupled to the photoelectric conversion layer; the sensing electrode electrically connected to a drain electrode of the thin film transistor.

Optionally, the sensing electrode is electrically connected to the drain electrode through a via in the insulating layer.

The sensing electrode is on a side of the insulating layer distal to the thin film transistor, the photosensor further comprises a dielectric layer on a side of the sensing electrode proximal to the photoelectric conversion layer.

Optionally, a projection of the photoelectric conversion layer on the base substrate overlaps with that of the thin film transistor in plan view of the base substrate.

Optionally, the photoelectric conversion layer is configured to receive substantially all light converted by the scintillator.

Optionally, the photoelectric conversion layer has an area substantially the same as that of a pixel.

The driving electrode and the sensing electrode are in a same layer.

Optionally, the radiation detector further comprises a passivation layer on a side of the scintillator layer proximal to the photoelectric conversion layer.

The photoelectric conversion layer comprises a perovskite material.

The perovskite material comprises CH₃NH₃PbI₃.

Optionally, the base substrate is a flexible base substrate.

Optionally, the radiation detector is x-ray detector.

In another aspect, the present invention provides a method of fabricating a radiation detector comprising a plurality of pixels and having a vertically stacked multi-layer structure according to claim 9, the method comprising forming a thin film transistor on a base substrate; forming a photosensor, the photosensor and the thin film transistor being formed in two different vertically stacked layers of the vertically stacked multi-layer structure; wherein the step of forming the photosensor comprises forming a photoelectric conversion layer on a side of the thin film transistor distal to the base substrate; and forming a scintillator layer on a side of the photoelectric conversion layer distal to the thin film transistor.

The method further comprises forming an insulating layer on a side of the photoelectric conversion layer proximal to the thin film transistor; the photosensor, the thin film transistor, and the insulating layer being formed in three different vertically stacked layers of the vertically stacked multilayer structure.

The step of forming the photosensor further comprises forming a driving electrode and a sensing electrode, such that the driving electrode and the sensing electrode are in the same layer; electrically connecting the driving electrode and the sensing electrode to the photoelectric conversion layer; and electrically connecting the sensing electrode to a drain electrode of the thin film transistor.

Optionally, the step of electrically connecting the sensing electrode to the drain electrode comprises forming a via in the insulating layer; and electrically connecting the sensing electrode to the drain electrode of the thin film transistor through the via.

The sensing electrode is formed on a side of the insulating layer distal to the thin film transistor; the method further comprising forming a dielectric layer on a side of the sensing electrode proximal to the photoelectric conversion layer.

Optionally, the step of forming the photoelectric conversion layer is performed by spin coating a perovskite material.

### BRIEF DESCRIPTION OF THE FIGURES

The following drawings are merely examples for illustrative purposes according to various disclosed embodiments and are not intended to limit the scope of the present invention.
FIG. 1 is a diagram illustrating the structure of a conventional indirect conversion radiation detector.
FIG. 2 is a diagram illustrating the structure of a radiation detector in some embodiments.
FIG. 3 is a diagram illustrating the structure of a radiation detector in some embodiments.

### DETAILED DESCRIPTION

The disclosure will now describe more specifically with reference to the following embodiments. It is to be noted that the following descriptions of some embodiments are presented herein for purpose of illustration and description only. It is not intended to be exhaustive or to be limited to the precise form disclosed.

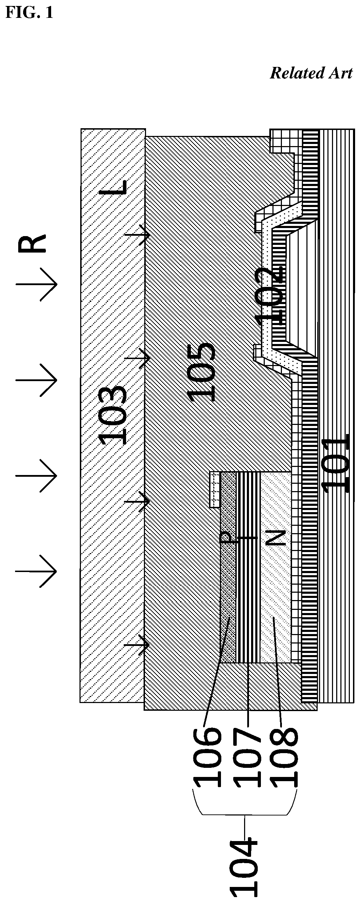

A conventional radiation detector includes a thin film transistor (TFT) array substrate having a plurality of pixels, each of which includes a TFT. FIG. 1 is a diagram illustrating the structure of a conventional radiation detector. As shown in FIG. 1, the conventional radiation detector includes a base substrate 101, a TFT 102 on the base substrate 101, a photosensor 104 substantially on a same horizontal plane as the TFT 102, an insulating layer 105 on a side of the TFT 102 and the photosensor 104 distal to the base substrate 101, and a scintillator layer 103 on a side of the insulating layer 105 distal to the base substrate 101. Typically, the photosensor 104 is a PIN photodiode 104. Referring to FIG. 1, the PIN photodiode 104 includes a P-type region 106, an N-type region 108, and an intrinsic region 107 between the P-type region 106 and the N-type region 108. The scintillator layer 103 converts radiation R (e.g., X-ray) to light L, and the PIN photodiode 104 converts light L to electrical charges.

In the conventional radiation detector, as show in FIG. 1, the photosensor 104 and the TFT 102 are disposed substantially on a same horizontal plane, e.g., a lateral movement of the photosensor 104 on the horizontal plane would be hindered by the TFT 102. Thus, the photosensing area of the photosensor 104 is limited by the TFT on the same horizontal plane. In the conventional radiation detector, a larger photosensing area requires a larger pixel area to fit in a larger photosensor, resulting in a reduced aperture ratio and a reduced detection resolution.

Accordingly, the present disclosure provides a radiation detector and a fabricating method thereof that substantially obviate one or more of the problems due to limitations and disadvantages of the related art. In one aspect, the present disclosure is directed to a novel radiation detector and a fabricating method thereof that substantially obviates one or more of the problems due to limitations and disadvantages of the related art. In the invention, the present radiation detector includes a plurality of pixels, at least one of the plurality of pixels has a vertically stacked multi-layer structure. In the invention, the radiation detector includes a base substrate; a thin film transistor on the base substrate; a scintillator layer on a side of the thin film transistor distal to the base substrate for converting radiation into light; and a photosensor including a photoelectric conversion layer on a side of the thin film transistor distal to the base substrate and proximal to the scintillator layer. The photoelectric conversion layer is optically coupled to the scintillator layer for converting light to electrical charges. The photosensor and the thin film transistor belong to two different vertically stacked layers of the vertically stacked multi-layer structure. As used herein, the term "optically coupled" refers to at least one coupled element being adapted to impart light to another coupled element directly or indirectly.

As used herein, the term "vertically stacked" means that layers or components are positioned as vertically spaced apart layers or components, each layer or component extending within a certain vertical region or zone of the detector. Optionally, the vertically stacked layers or components may be substantially vertically aligned (such as in a single column). Optionally, projections of the vertically stacked layers or components on a base substrate of the detector overlap with each other. Optionally, one or more layer or component may be laterally offset relative to the other layer or component. Optionally, a projection of one or more layer or component on the base substrate does not overlap with a projection of the other layer or component on the base substrate.

As used herein, the term "scintillator layer" refers to a functional layer in a radiation detector which is configured to convert radiation into light. Optionally, the scintillator layer is a luminescent layer comprising a luminescent material.

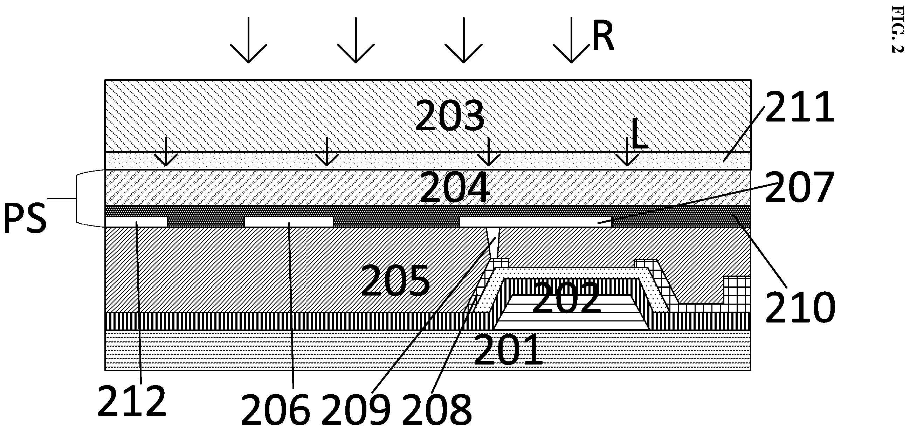

FIG. 2 is a diagram illustrating the structure of a radiation detector in some embodiments. FIG. 2 shows a pixel of the radiation detector in some embodiments. Referring to FIG. 2, the radiation detector in the embodiment includes a base substrate 201, a thin film transistor 202 on the base substrate 201, a scintillator layer 203 on a side of the thin film transistor 202 distal to the base substrate 201 for converting radiation into light, and a photosensor PS on a side of the thin film transistor 202 distal to the base substrate 201 and proximal to the scintillator layer 203 for converting light to electrical charges. The photosensor PS and the thin film transistor 202 are in two different vertically stacked layers of a vertically stacked multi-layer structure of the radiation detector. As shown in FIG. 2, the photosensor PS includes a photoelectric conversion layer 204 on a side of the thin film transistor 202 distal to the base substrate 201 and proximal to the scintillator layer 203. The photoelectric conversion layer 204 is optically coupled to the scintillator layer 203.

In some embodiments, the radiation detector includes a radiation source for generating radiation R, such as an X-ray or gamma ray. The radiation detector includes a plurality of pixels, e.g., photosensitive pixels for sensing radiation R. The scintillator layer 203 converts radiation R to light L, and the photosensor converts light L to electrical charges. Based on the electrical charges, the radiation detector outputs a detection signal corresponding to the amount of radiation in each pixel.

In some embodiments, the plurality of pixels are disposed on the base substrate. The radiation detector further includes a plurality of gate lines along a first direction and a plurality of data lines along a second direction. The plurality of gate lines and the plurality of data lines cross over each other, forming a plurality of intersections. The gate lines are configured to provide scan signals to the corresponding TFTs. The data lines transmit the detection signals from the radiation detector to an integrated circuit. In response to the scan signals, the TFTs are turned on to transmit the detection signals from the photosensors to the data lines. Each TFT includes a gate electrode, an active layer, a source electrode, a drain electrode, and a gate insulating layer between the active layer and the gate electrode. Various appropriate materials may be used for making the active layer. Examples of appropriate active layer material includes, but are not limited to, amorphous silicon, polycrystalline silicon, metal oxides (e.g., ITO, IZTO, IGTO), etc. The source electrode and the drain electrode are in contact with the active layer. Optionally, an ohmic contact layer may be formed between the active layer and the source electrode, and between the active layer and the drain electrode to reduce contact resistance. Optionally, the drain electrode of the TFT is electrically connected to a sensing electrode of the photosensor.

Various appropriate materials may be used for making the base substrate. Examples of materials suitable for making the base substrate include, but are not limited to, glass, quartz, polyimide, and polyester, etc. Optionally, the base substrate is a flexible base substrate (e.g., polyimide base substrate). Optionally, the base substrate is a relatively inflexible base substrate (e.g., a glass base substrate).

Any appropriate scintillator materials may be used for making the scintillator layer 203. In some embodiments, the scintillator material is a light wavelength conversion material that converts radiation (e.g., X-ray) to visible light. Examples of scintillator materials include, but are not limited to, cesium iodide activated by thallium (CsI(Tl)), cesium iodide activated by sodium (CsI(Na)), sodium iodide activated by thallium (NaI(Tl)), zinc sulfide or zinc oxide (ZnS or ZnO), yttrium aluminum perovskite activated by cerium (YAP(Ce)), yittrium aluminum garnet activated by cerium (YAG(Ce), bismuth germinate (BGO), calcium fluoride activated by europium (CaF(Eu)), lutetium aluminum garnet activated by cerium (LuAG(Ce)), gadolinium silicate doped with cerium (GSO), cadmium tungstate (CdWO4; CWO), lead tungstate (PbWO4; PWO), double tungstate of sodium and bismuth (NaBi(WO4)2; NBWO), zinc selenide doped with tellurium (ZnSe(Te)), lanthanum bromide activated by cerium (LaBr3(Ce)), cerium bromide (CeBr3), or lanthanum chloride activated by cerium (LaCl3(Ce)), or a combination thereof. Optionally, the scintillator material is cesium iodide activated by thallium (CsI(Tl)). Optionally, the scintillator layer 203 has a thickness in the range of approximately 400 µm to approximately 1000 µm.

Any appropriate methods may be used for making the photoelectric conversion layer 204. In the invention, the photoelectric conversion material is a perovskite material comprising CH₃NH₃PbI₃.

Referring to FIG. 2, the radiation detector in the invention further includes an insulating layer 205 on a side of the photoelectric conversion layer 204 proximal to the thin film transistor 202. The photosensor PS, the thin film transistor 202, and the insulating layer 205 are in three different vertically stacked layers of the vertically stacked multilayer structure.

In some embodiments, as shown in FIG. 2, the photosensor PS (including the photoelectric conversion layer 204) and the TFT 202 are substantially vertically aligned, and a projection of the photosensor PS (including a projection of the photoelectric conversion layer 204) on the base substrate 201 overlaps with a projection of the TFT 202 on the base substrate 201.

In some embodiments, the photoelectric conversion layer 204 has an area substantially the same as that of a pixel. For example, in some embodiments, the photosensor PS (including the photoelectric conversion layer 204), the insulating layer 205, and the TFT 202 are substantially vertically aligned, and a projection of the photosensor PS (including a projection of the photoelectric conversion layer 204) on the base substrate 201 overlaps with a projection of the TFT 202 and a projection of the insulating layer 205 on the base substrate 201.

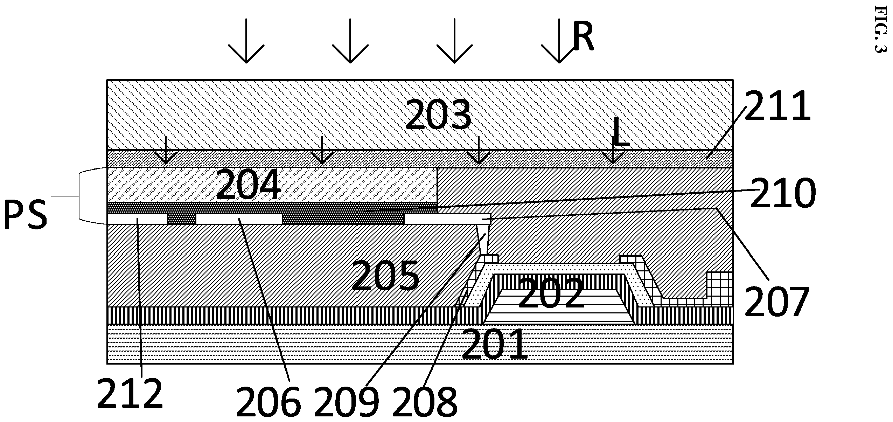

FIG. 3 is a diagram illustrating the structure of a radiation detector in some embodiments. FIG. 3 shows a pixel of the radiation detector in some embodiments. In some embodiments, as shown in FIG. 3, the photosensor PS (including the photoelectric conversion layer 204) and the TFT 202 are in two different vertically stacked layers of the vertically stacked multilayer structure. The photosensor PS (including the photoelectric conversion layer 204), however, is laterally offset relative to the TFT 202, a projection of the photosensor PS (including a projection of the photoelectric conversion layer 204) on the base substrate 201 does not overlap with a projection of the TFT 202 on the base substrate 201.

The present disclosure provides a novel radiation detector in which the photosensor and the thin film transistor are in two different vertically stacked layers of a vertically stacked multi-layer structure. By having the photosensor in a vertical zone different from that of the TFT, a large photosensing area may be made possible. For examples, the photoelectric conversion layer in the present radiation detector may be made to have an area substantially the same as that of a pixel, or that of the insulating layer, or that of the scintillator layer in the pixel. By having a large photosensing area, substantially all light converted by the scintillator layer may be received by the photoelectric conversion layer. Accordingly, the present radiation detector has a much higher resolution as compared to the conventional indirect conversion radiation detector having a PIN photodiode.

Moreover, a large area photoelectric conversion layer 204 may be conveniently fabricated by a solution-based coating method. The manufacturing costs of the radiation detector may be reduced.

Referring to FIG. 2, the photosensor PS in the present radiation detector further includes a driving electrode 206 and a sensing electrode 207 coupled to the photoelectric conversion layer 204. The sensing electrode 207 is electrically connected to the drain electrode 208 of the TFT 202. Optionally, the driving electrode 206 provides a bias voltage signal to the photoelectric conversion layer 204.

Various appropriate electrode materials may be used for making the driving electrode 206 and the sensing electrode 207. Examples of appropriate electrode materials include, but are not limited to, nano-silver, graphene, nano-carbon tube, molybdenum, aluminum, chromium, tungsten, titanium, tantalum, copper, and alloys or laminates containing the same. Various appropriate fabricating methods may be used for making the driving electrode 206 and the sensing electrode 207. For example, a driving electrode and sensing electrode material may be deposited on the substrate (e.g., by sputtering or vapor deposition or solution coating); and patterned (e.g., by lithography such as a wet etching process) to form the driving electrode 206 and the sensing electrode 207. Optionally, the driving electrode 206 and the sensing electrode 207 may be spin coated on the substrate. In the invention, the driving electrode 206 and the sensing electrode 207 have a thickness in the range of approximately 50 nm to approximately 200 nm.

In the invention, driving electrode 206 and the sensing electrode 207 are in the same layer. The driving electrode 206 and the sensing electrode 207 may be coupled to a same side of the photoelectric conversion layer 204.

Referring to FIG. 2, the radiation detector further includes one or more electrode lead wire 212 connecting the driving electrode 206 to one or more integrated circuit. Optionally, the one or more electrode lead wire 212 may be in a same layer as the driving electrode 206 and the sensing electrode 207, as shown in FIG. 2. Optionally, the one or more electrode lead wire 212 may be in a layer different from that of the driving electrode 206 and the sensing electrode 207, and is connected to the driving electrode 206 through one or more via. Various appropriate conductive materials may be used for making the one or more electrode lead wire 212. Examples of appropriate conductive materials include, but are not limited to, molybdenum, aluminum, silver, chromium, tungsten, titanium, tantalum, copper, and alloys or laminates containing the same.

Various appropriate insulating materials and various appropriate fabricating methods may be used to make the insulating layer 205. For example, an insulating material may be deposited on the substrate by a plasma-enhanced chemical vapor deposition (PECVD) process. Examples of appropriate insulating materials include, but are not limited to, polyimide, silicon oxide (SiO_{y}), silicon nitride (SiN_{y}, e.g., Si₃N₄), and silicon oxynitride (SiOₓN_{y}).

In some embodiments, the sensing electrode 207 is electrically connected to the drain electrode 208 of the TFT 202 through a via 209 in the insulating layer 205. As shown in FIG. 2, the sensing electrode 207 is on a side of the insulating layer 205 distal to the thin film transistor 202, the via 209 extends through the insulating layer 205.

Referring to FIG. 2, in the invention, the photosensor PS further includes a dielectric layer 210 on a side of the sensing electrode 207 proximal to the photoelectric conversion layer 204. In the invention, the driving electrode 206 and the sensing electrode 207 are in a same layer, and the dielectric layer 210 is on a side of the driving electrode 206 and the sensing electrode 207 proximal to the photoelectric conversion layer 204. By having a dielectric layer 210 between the photosensor electrodes (e.g., the sensing electrode 207 and the driving electrode 206) and the photoelectric conversion layer 204, leak current in the photosensor PS may be much reduced. Because the leak current in the photosensor PS is much reduced, a much lower noise, and a much higher signal to noise ratio, in the photosensor PS may be achieved. The radiation detector having a dielectric layer 210 between the photosensor electrodes and the photoelectric conversion layer 204 may achieve a higher resolution.

Various appropriate dielectric materials and various appropriate fabricating methods may be used to make the dielectric layer 210. For example, a dielectric material may be deposited on the substrate by a plasma-enhanced chemical vapor deposition (PECVD) process. Examples of appropriate dielectric materials include, but are not limited to, polyimide, silicon oxide (SiO_{y}), silicon nitride (SiN_{y}, e.g., Si₃N₄), and silicon oxynitride (SiOₓN_{y}). In some embodiments, the dielectric layer 210 has a relative small thickness (e.g., as compared to other layers of the radiation detector). Optionally, the dielectric layer 210 has a thickness in the range of approximately 20 nm to approximately 200 nm.

Referring to FIG. 2, the radiation detector in the embodiment further includes a passivation layer 211 on a side of the scintillator layer 203 proximal to the photoelectric conversion layer 204. Various appropriate passivation materials and various appropriate fabricating methods may be used to make the passivation layer 211. For example, a passivation material may be deposited on the substrate by a plasma-enhanced chemical vapor deposition (PECVD) process. Examples of appropriate passivation materials include, but are not limited to, polyimide, silicon oxide (SiO_{y}), silicon nitride (SiN_{y}, e.g., Si₃N₄), and silicon oxynitride (SiOₓN_{y}).

In another aspect, the present disclosure provides a method of fabricating a radiation detector having a plurality of pixels, each of which has a thin film transistor. The radiation detector fabricated by the present method has a vertically stacked multi-layer structure. In some embodiments, the method includes forming a thin film transistor on a base substrate; forming a photosensor; and forming a scintillator layer on a side of the photosensor distal to the thin film transistor. According to the present method, the photosensor and the thin film transistor are formed in two different vertically stacked layers of the vertically stacked multi-layer structure.

In the invention, the step of forming the photosensor includes forming a photoelectric conversion layer on a side of the thin film transistor distal to the base substrate.

The scintillator layer is formed on a side of the photoelectric conversion layer distal to the thin film transistor. Various appropriate fabricating methods may be used to make the photoelectric conversion layer. For example, a photoelectric conversion material may be deposited on the substrate by a plasma-enhanced chemical vapor deposition (PECVD) process. Optionally, the photoelectric conversion layer may be formed by spin coating a photoelectric conversion material. In the invention, the photoelectric conversion material is a perovskite material comprising CH3NH3PbI3.

In the invention, the method further includes forming an insulating layer on a side of the photoelectric conversion layer proximal to the thin film transistor. The photosensor, the thin film transistor, and the insulating layer are formed in three different vertically stacked layers of the vertically stacked multilayer structure.

Optionally, the photosensor (including the photoelectric conversion layer) and the TFT are formed to be substantially vertically aligned. Optionally, the photosensor (including the photoelectric conversion layer) and the TFT are formed so that a projection of the photosensor (including a projection of the photoelectric conversion layer) on the base substrate overlaps with a projection of the TFT on the base substrate.

Optionally, the photosensor (including the photoelectric conversion layer), the insulating layer, and the TFT are formed to be substantially vertically aligned. Optionally, the photosensor (including the photoelectric conversion layer), the insulating layer, and the TFT are formed so that a projection of the photosensor (including a projection of the photoelectric conversion layer) on the base substrate overlaps with those of the TFT and the insulating layer on the base substrate.

Optionally, the photosensor (including the photoelectric conversion layer) and the TFT are formed in two different vertically stacked layers of the vertically stacked multilayer structure. Optionally, the photosensor (including the photoelectric conversion layer), however, is formed to be laterally offset relative to the TFT. Optionally, the photosensor (including the photoelectric conversion layer) is formed so that a projection of the photosensor (including a projection of the photoelectric conversion layer) on the base substrate does not overlap with a projection of the TFT on the base substrate.

In the invention, the step of forming the photosensor further includes forming a driving electrode and a sensing electrode; electrically coupling the driving electrode and the sensing electrode to the photoelectric conversion layer; and electrically connecting the sensing electrode to a drain electrode of the thin film transistor. In the invention, the driving electrode and the sensing electrode are formed to have a thickness in the range of

approximately 50 nm to approximately 200 nm. In the invention, the driving electrode and the sensing electrode may be formed in a same layer. In the invention, the driving electrode and the sensing electrode are coupled to a same side of the photoelectric conversion layer.

In some embodiments, the method further includes forming one or more electrode lead wire, and electrically connecting the driving electrode to one or more integrated circuit through the one or more electrode lead wire. Optionally, the one or more electrode lead wire may be formed in a same layer as the driving electrode and the sensing electrode. Optionally, the one or more electrode lead wire 212 may be formed in a layer different from that of the driving electrode and the sensing electrode. Optionally, the one or more electrode lead wire is connected to the driving electrode through one or more via. Optionally, the method further includes forming a via for connecting the one or more electrode lead wire to the driving electrode.

In some embodiments, the step of electrically connecting the sensing electrode to the drain electrode of the thin film transistor includes forming a via in the insulating layer; and electrically connecting the sensing electrode to the drain electrode of the thin film transistor through the via. Optionally, the via is formed to extend through the insulating layer.

In the invention, the sensing electrode is formed on a side of the insulating layer distal to the thin film transistor. In the invention, the method further includes forming a dielectric layer on a side of the sensing electrode proximal to the photoelectric conversion layer. In the invention, the driving electrode and the sensing electrode are formed in a same layer, and the dielectric layer is formed on a side of the driving electrode and the sensing electrode proximal to the photoelectric conversion layer. By having a dielectric layer between the photosensor electrodes (e.g., the sensing electrode and the driving electrode) and the photoelectric conversion layer, leak current of the photosensor may be much reduced.

Because the leak current in the photosensor PS is much reduced, a much lower noise, and a much higher signal to noise ratio, in the photosensor PS may be achieved. The radiation detector having a dielectric layer between the photosensor electrodes and the photoelectric conversion layer may achieve a higher resolution.

In some embodiments, the method further includes forming a passivation layer on a side of the scintillator layer proximal to the photoelectric conversion layer.

The foregoing description of the embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto.

Therefore, the term "the invention", "the present invention" or the like does not necessarily limit the claim scope to a specific embodiment, and the reference to exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A radiation detector having a plurality of pixels, comprising:
a base substrate (101, 201);
a thin film transistor (202) on the base substrate (101, 201);
a scintillator layer (203) on a side of the thin film transistor (202) distal to the base substrate (101, 201) for converting radiation into light; and
a photosensor (PS) on a side of the thin film transistor (202) distal to the base substrate (101, 201) and proximal to the scintillator layer (203) for converting light to electrical charges; the photosensor (PS) and the thin film transistor (202) being in two different vertically stacked layers of a vertically stacked multi-layer structure; the photosensor (PS) comprising a photoelectric conversion layer (204) optically coupled to the scintillator layer (203),
wherein the radiation detector further comprises an insulating layer (205) on a side of the photoelectric conversion layer (204) proximal to the thin film transistor (202); the photosensor (PS), the thin film transistor (202), and the insulating layer (205) being in three different vertically stacked layers of the vertically stacked multilayer structure;
wherein the photosensor (PS) further comprises a driving electrode (206) and a sensing electrode (207) coupled to the photoelectric conversion layer (204); the sensing electrode (207) electrically connected to a drain electrode (208) of the thin film transistor (202); and
wherein the sensing electrode (207) is on a side of the insulating layer (205) distal to the thin film transistor (202), **characterized in that** the
driving electrode (206) and the sensing electrode (207) are in a same layer, and the photosensor (PS) further comprises a dielectric layer (210) on a side of the driving electrode (206) and the sensing electrode (207) proximal to the photoelectric conversion layer (204);
the driving electrode (206) and the sensing electrode (207) have a thickness in the range of 50 nm to 200 nm;
the photoelectric conversion layer (204) comprises a perovskite material; and
the perovskite material comprises CH₃NH₃PbI₃.

2. The radiation detector of claim 1, wherein the sensing electrode (207) is electrically connected to the drain electrode (208) through a via in the insulating layer (205).

3. The radiation detector of claim 1, wherein a projection of the photoelectric conversion layer (204) on the base substrate (101, 201) overlaps with that of the thin film transistor (202) in plan view of the base substrate.

4. The radiation detector of claim 1, wherein the photoelectric conversion layer (204) is configured to receive substantially all light converted by the scintillator layer (203);

5. The radiation detector of claim 1, wherein the photoelectric conversion layer (204) has an area substantially the same as that of a pixel.

6. The radiation detector of claim 1, further comprising a passivation layer on a side of the scintillator layer (203) proximal to the photoelectric conversion layer (204).

7. The radiation detector of claim 1, wherein the base substrate (101, 201) is a flexible base substrate.

8. The radiation detector of claim 1, wherein the radiation detector is x-ray detector.

9. A method of fabricating a radiation detector comprising a plurality of pixels and having a vertically stacked multi-layer structure, the method comprising:
forming a thin film transistor (202) on a base substrate (101, 201);
forming a photosensor (PS), the photosensor (PS) and the thin film transistor (202) being formed in two different vertically stacked layers of the vertically stacked multi-layer structure; wherein the step of forming the photosensor (PS) comprises forming a photoelectric conversion layer (204) on a side of the thin film transistor (202) distal to the base substrate (101, 201); and
forming a scintillator layer (203) on a side of the photoelectric conversion layer (204) distal to the thin film transistor (202);
wherein the method further comprises forming an insulating layer (205) on a side of the photoelectric conversion layer (204) proximal to the thin film transistor (202); the photosensor (PS), the thin film transistor (202), and the insulating layer (205) being formed in three different vertically stacked layers of the vertically stacked multilayer structure;
wherein the step of forming the photosensor (PS) further comprises forming a driving electrode (206) and a sensing electrode (207) such that the driving electrode (206) and the sensing electrode (207) are in a same layer; electrically connecting the driving electrode (206) and the sensing electrode (207) to the photoelectric conversion layer (204); and electrically connecting the sensing electrode (207) to a drain electrode (208) of the thin film transistor (202); and
wherein the sensing electrode (207) is formed on a side of the insulating layer (205) distal to the thin film transistor (202); the method further comprising forming a dielectric layer (210) on a side of the driving electrode (206) and the sensing electrode (207) proximal to the photoelectric conversion layer (204) ;
the driving electrode (206) and the sensing electrode (207) have a thickness in the range of 50 nm to 200 nm;
the photoelectric conversion layer (204) comprises a perovskite material; and
the perovskite material comprises CH₃NH₃PbI₃.

10. The method of claim 9, wherein the step of electrically connecting the sensing electrode (207) to the drain electrode (208) comprises forming a via in the insulating layer (205); and electrically connecting the sensing electrode (207) to the drain electrode (208) of the thin film transistor (202) through the via.

11. The method of claim 9, wherein the step of forming the photoelectric conversion layer (204) is performed by spin coating the perovskite material.

## Patentansprüche

1. Strahlungsdetektor mit mehreren Pixeln, aufweisend:
ein Basissubstrat (101, 201);
einen Dünnschichttransistor (202) auf dem Basissubstrat (101, 201);
eine Szintillatorschicht (203) auf einer Seite des Dünnschichttransistors (202) distal zu dem Basissubstrat (101, 201) zum Umwandeln von Strahlung in Licht; und
einen Photosensor (PS) auf einer Seite des Dünnschichttransistors (202) distal zu dem Basissubstrat (101, 201) und proximal zu der Szintillatorschicht (203) zum Umwandeln von Licht in elektrische Ladungen; wobei der Photosensor (PS) und der Dünnschichttransistor (202) in zwei unterschiedlichen vertikal gestapelten Schichten einer vertikal gestapelten Mehrschichtstruktur vorliegen; wobei der Photosensor (PS) eine photoelektrische Umwandlungsschicht (204) aufweist, die optisch mit der Szintillatorschicht (203) gekoppelt ist,
wobei der Strahlungsdetektor ferner eine Isolierschicht (205) auf einer Seite der photoelektrischen Umwandlungsschicht (204) proximal zu dem Dünnschichttransistor (202) aufweist; wobei der Photosensor (PS), der Dünnschichttransistor (202) und die Isolierschicht (205) in drei unterschiedlichen vertikal gestapelten Schichten der vertikal gestapelten Mehrschichtstruktur vorliegen;
wobei der Photosensor (PS) ferner eine Ansteuerelektrode (206) und eine Sensorelektrode (207) aufweist, die mit der photoelektrischen Umwandlungsschicht (204) gekoppelt sind; wobei die Sensorelektrode (207) elektrisch mit einer Drainelektrode (208) des Dünnschichttransistors (202) verbunden ist; und
wobei sich die Sensorelektrode (207) auf einer Seite der Isolierschicht (205) distal zu dem Dünnschichttransistor (202) befindet, **dadurch gekennzeichnet, dass** die Ansteuerelektrode (206) und die Sensorelektrode (207) sich in derselben Schicht befinden und der Photosensor (PS) ferner eine dielektrische Schicht (210) auf einer Seite der Ansteuerelektrode (206) und der Sensorelektrode (207) proximal zu der photoelektrischen Umwandlungsschicht (204) aufweist;
die Ansteuerelektrode (206) und die Sensorelektrode (207) eine Dicke im Bereich von 50 nm bis 200 nm haben;
die photoelektrische Umwandlungsschicht (204) ein Perowskit-Material aufweist; und
das Perowskit-Material CH₃NH₃PbI₃ umfasst.

2. Strahlungsdetektor nach Anspruch 1, wobei die Sensorelektrode (207) mit der Drainelektrode (208) über eine Durchkontaktierung in der Isolierschicht (205) elektrisch verbunden ist.

3. Strahlungsdetektor nach Anspruch 1, wobei sich eine Projektion der photoelektrischen Umwandlungsschicht (204) auf dem Basissubstrat (101, 201) mit derjenigen des Dünnschichttransistors (202) in Draufsicht auf das Basissubstrat überlappt.

4. Strahlungsdetektor nach Anspruch 1, wobei die photoelektrische Umwandlungsschicht (204) konfiguriert ist, um im Wesentlichen das gesamte Licht, das von der Szintillatorschicht (203) umgewandelt wird, zu empfangen.

5. Strahlungsdetektor nach Anspruch 1, wobei die photoelektrische Umwandlungsschicht (204) eine Fläche hat, die im Wesentlichen derjenigen eines Pixels entspricht.

6. Strahlungsdetektor nach Anspruch 1, ferner eine Passivierungsschicht auf einer Seite der Szintillatorschicht (203) proximal zu der photoelektrischen Umwandlungsschicht (204) aufweisend.

7. Strahlungsdetektor nach Anspruch 1, wobei das Basissubstrat (101, 201) ein flexibles Basissubstrat ist.

8. Strahlungsdetektor nach Anspruch 1, wobei der Strahlungsdetektor ein Röntgendetektor ist.

9. Verfahren zur Herstellung eines Strahlungsdetektors, der mehrere Pixel aufweist und eine vertikal gestapelte Mehrschichtstruktur hat, wobei das Verfahren umfasst:
Bilden eines Dünnschichttransistors (202) auf einem Basissubstrat (101, 201);
Bilden eines Photosensors (PS), wobei der Photosensor (PS) und der Dünnschichttransistor (202) in zwei unterschiedlichen vertikal gestapelten Schichten der vertikal gestapelten Mehrschichtstruktur gebildet werden; wobei der Schritt des Bildens des Photosensors (PS) Bilden einer photoelektrischen Umwandlungsschicht (204) auf einer Seite des Dünnschichttransistors (202) distal zu dem Basissubstrat (101, 201) umfasst; und
Bilden einer Szintillatorschicht (203) auf einer Seite der photoelektrischen Umwandlungsschicht (204) distal zu dem Dünnschichttransistor (202);
wobei das Verfahren ferner Bilden einer Isolierschicht (205) auf einer Seite der photoelektrischen Umwandlungsschicht (204) proximal zu dem Dünnschichttransistor (202) umfasst; wobei der Photosensor (PS), der Dünnschichttransistor (202) und die Isolierschicht (205) in drei unterschiedlichen vertikal gestapelten Schichten der vertikal gestapelten Mehrschichtstruktur gebildet werden;
wobei der Schritt des Bildens des Photosensors (PS) ferner umfasst: Bilden einer Ansteuerelektrode (206) und einer Sensorelektrode (207), so dass sich die Ansteuerelektrode (206) und die Sensorelektrode (207) in derselben Schicht befinden; elektrisches Verbinden der Ansteuerelektrode (206) und der Sensorelektrode (207) mit der photoelektrischen Umwandlungsschicht (204); und elektrisches Verbinden der Sensorelektrode (207) mit einer Drainelektrode (208) des Dünnschichttransistors (202); und
wobei die Sensorelektrode (207) auf einer Seite der Isolierschicht (205) distal zu dem Dünnschichttransistor (202) gebildet wird; wobei das Verfahren ferner Bilden einer dielektrischen Schicht (210) auf einer Seite der Ansteuerelektrode (206) und der Sensorelektrode (207) proximal zu der photoelektrischen Umwandlungsschicht (204) umfasst;
die Ansteuerelektrode (206) und die Sensorelektrode (207) eine Dicke im Bereich von 50 nm bis 200 nm haben;
die photoelektrische Umwandlungsschicht (204) ein Perowskit-Material umfasst; und
das Perowskit-Material CH₃NH₃PbI₃ umfasst.

10. Verfahren nach Anspruch 9, wobei der Schritt des elektrischen Verbindens der Sensorelektrode (207) mit der Drainelektrode (208) Bilden einer Durchkontaktierung in der Isolierschicht (205) und elektrisches Verbinden der Sensorelektrode (207) mit der Drainelektrode (208) des Dünnschichttransistors (202) durch die Durchkontaktierung umfasst.

11. Verfahren nach Anspruch 9, wobei der Schritt des Bildens der photoelektrischen Umwandlungsschicht (204) durch Schleuderbeschichten des Perowskit-Materials durchgeführt wird.

## Revendications

1. Détecteur de rayonnement ayant une pluralité de pixels, comportant :
un substrat de base (101, 201),
un transistor à couches minces (202) sur le substrat de base (101, 201),
une couche de scintillateur (203) sur un côté du transistor à couches minces (202) distal au substrat de base (101, 201) pour convertir un rayonnement en lumière, et
un photocapteur (PS) sur un côté du transistor à couches minces (202) distal au substrat de base (101, 201) et proximal à la couche de scintillateur (203) pour convertir la lumière en charges électriques, le photocapteur (PS) et le transistor à couches minces (202) étant dans deux différentes couches empilées verticalement d'une structure à couches multiples empilées verticalement, le photocapteur (PS) comportant une couche de conversion photoélectrique (204) optiquement couplée à la couche de scintillateur (203),
dans lequel le détecteur de rayonnement comporte en outre une couche isolante (205) sur un côté de la couche de conversion photoélectrique (204) proximal au transistor à couches minces (202), le photocapteur (PS), le transistor à couches minces (202) et la couche isolante (205) étant dans trois différentes couches empilées verticalement de la structure à couches multiples empilées verticalement,
dans lequel le photocapteur (PS) comporte en outre une électrode de commande (206) et une électrode de détection (207) couplées à la couche de conversion photoélectrique (204), l'électrode de détection (207) étant électriquement connectée à une électrode de drain (208) du transistor à couches minces (202), et
dans lequel l'électrode de détection (207) est sur un côté de la couche isolante (205) distal au transistor à couches minces (202), **caractérisé en ce que** l'électrode de commande (206) et l'électrode de détection (207) sont dans une même couche, et le photocapteur (PS) comporte en outre une couche diélectrique (210) sur un côté de l'électrode de commande (206) et de l'électrode de détection (207) proximal à la couche de conversion photoélectrique (204),
l'électrode de commande (206) et l'électrode de détection (207) ont une épaisseur dans la plage de 50 nm à 200 nm,
la couche de conversion photoélectrique (204) comporte une pérovskite, et la pérovskite comporte CH₃NH₃PbI₃.

2. Détecteur de rayonnement selon la revendication 1, dans lequel l'électrode de détection (207) est électriquement connectée à l'électrode de drain (208) via un trou d'interconnexion dans la couche isolante (205).

3. Détecteur de rayonnement selon la revendication 1, dans lequel une saillie de la couche de conversion photoélectrique (204) sur le substrat de base (101, 201) chevauche celle du transistor à couches minces (202) en vue de dessus du substrat de base.

4. Détecteur de rayonnement selon la revendication 1, dans lequel la couche de conversion photoélectrique (204) est configurée pour recevoir pratiquement toute la lumière convertie par la couche de scintillateur (203).

5. Détecteur de rayonnement selon la revendication 1, dans lequel la couche de conversion photoélectrique (204) a une surface sensiblement identique à celle d'un pixel.

6. Détecteur de rayonnement selon la revendication 1, comportant en outre une couche de passivation sur un côté de la couche de scintillateur (203) proximal à la couche de conversion photoélectrique (204).

7. Détecteur de rayonnement selon la revendication 1, dans lequel le substrat de base (101, 201) est un substrat de base souple.

8. Détecteur de rayonnement selon la revendication 1, dans lequel le détecteur de rayonnement est un détecteur de rayons X

9. Procédé de fabrication d'un détecteur de rayonnement comportant une pluralité de pixels et ayant une structure à couches multiples empilées verticalement, le procédé comportant de :
former un transistor à couches minces (202) sur le substrat de base (101, 201), former un photocapteur (PS), le photocapteur (PS) et le transistor à couches minces (202) étant formés dans deux différentes couches empilées verticalement de la structure à couches multiples empilées verticalement, dans lequel l'étape de formation du 35 photocapteur (PS) comporte la formation d'une couche de conversion photoélectrique (204) sur un côté du transistor à couches minces (202) distal au substrat de base (101, 201), et
former une couche de scintillateur (203) sur un côté de la couche de conversion photoélectrique (204) distal au transistor à couches minces (202),
dans lequel le procédé comporte en outre la formation d'une couche isolante (205) sur un côté de la couche de conversion photoélectrique (204) proximal au transistor à couches minces (202), le photocapteur (PS), le transistor à couches minces (202) et la couche isolante (205) étant formés dans trois différentes couches empilées verticalement de la structure à couches multiples empilées verticalement,
1dans lequel l'étape de formation du photocapteur (PS) comporte en outre la formation d'une électrode de commande (206) et d'une électrode de détection (207) de telle sorte que l'électrode de commande (206) et l'électrode de détection (207) sont dans une même couche, la connexion électrique de l'électrode de commande (206) et de l'électrode de détection (207) à la couche de conversion photoélectrique (204), et la connexion électrique de l'électrode de détection (207) à une électrode de drain (208) du transistor à couches minces (202), et
dans lequel l'électrode de détection (207) est formée sur un côté de la couche isolante (205) distal au transistor à couches minces (202), le procédé comportant en outre la formation d'une couche diélectrique (210) sur un côté de l'électrode de commande (206) et de l'électrode de détection (207) proximal à la couche de conversion photoélectrique (204),
l'électrode de commande (206) et l'électrode de détection (207) ont une épaisseur dans la plage de 50 nm à 200 nm,
la couche de conversion photoélectrique (204) comporte une pérovskite, et
la pérovskite comporte CH₃NH₃PbI₃.

10. Procédé selon la revendication 9, dans lequel l'étape de connexion électrique de l'électrode de détection (207) à l'électrode de drain (208) comporte la formation d'un trou d'interconnexion dans la couche isolante (205), et la connexion électrique de l'électrode 30 de détection (207) à l'électrode de drain (208) du transistor à couches minces (202) via le trou d'interconnexion.

11. Procédé selon la revendication 9, dans lequel l'étape de formation de la couche de conversion photoélectrique (204) est réalisée par un dépôt à la tournette de la pérovskite.
